# EUROPEAN PATENT APPLICATION

(11) **EP 2 003 590 A1**
(43) Date of publication of application: **17.12.2008**
(21) Application number: 07011374.1
(22) Date of filing: 11.06.2007
(51) Int. Cl.: G06F 21/20

(54) **Integrated systems for simultaneous mutual authentification of database and user**

(71) Applicant: Gardner, Richard Mervyn, Chelwood Gate, East Sussex RH17 7LE (GB)
(72) Inventor: Gardner, Richard Mervyn, Chelwood Gate, East Sussex RH17 7LE (GB)

(57) **Abstract**

In the field of user authentication, the present invention provides an integrated system for the mutual authentication of a system database and a registered user with a view to increasing the security of remote authentication and the prevention of "phishing/man-in-the-middle" attacks, by one of several alternative means including Code matching, PIN verification, Image reproduction and recognition, Signature and personal data verification, DNA verification and Biometric verification, in each case by means of the differential between variable Codes computed at the database from data recorded for that user and at a remote terminal from replicate data retrieved from a data carrying device. The Codes are derived from the recorded data and a simple algorithm such that the Codes are not predicable.

## Description

### FIELD OF THE INVENTION

The present invention concerns improvements in the field of the authentication of a system user (hereafter a "User") to that system including a means of combating the two related but different attacks on authentication systems of "phishing" and of the "man-in-the-middle" attack, the former involving the obtaining of personal data from a system User by fraudulent means by posing as the relevant system Database or Internet Website (hereafter called for the sake of brevity and clarity but not by way of limitation a "Database") and the latter involving the interception of single-use authentication Codes "in-the-middle" between a User and the Database for replay, in both cases using the personal data or Codes to fraudulently access the system Database.

The claimed improvements are derived from a simple system of authentication which in alternative embodiments provide for a complete system, for a means of significantly improving existing systems and as a means of enhancing and protecting any form of Biometric authentication without any reference to or effect on any proprietary Biometric algorithms.

In this Application, the word "Database" means both the actual system to which authentication is sought but also where the context admits the Master System and those operational functions of the system which computes Codes, receives and sends Codes and which allows or rejects access from an authentication attempt.

### BACKGROUND TO THE INVENTION

There is a considerable range of different methods of authentication with a wide range of claimed security, attributes, complexity, and cost, but by far the most used in practice is a system in which subsequent to identifying him or her self (with "userID"), the User inputs a Password or Personal Identification Number (hereafter called for the sake of brevity and clarity but not by way of limitation a "PIN"), which, being recognised by the Database, is taken as authentication of the User. This system is the most widely used because of its simplicity, familiarity and effectiveness.

However, such a system does have significant security flaws and its suitability for systems requiring a higher level of security is questionable, partly because of the ease with which most fixed PIN's (or at least Passwords) may be discovered and partly because of the increase in phishing and man-in-the-middle attacks whereby a User's personal data and authentication codes are obtained or intercepted and used to gain fraudulent access.

Various attempts have been made to increase the security of the userID PIN system - for example, by changing the PIN regularly, having longer PIN's, alpha-numeric PIN's, or only using a part of the PIN - but the danger of phishing and man-in-the-middle attacks remain and indeed is perceptibly increasing.

Another widespread and supposedly more secure (and certainly many times as expensive) system for the authentication of a remote User is that whereby a variable Code, generated by a token or device usually (but not necessarily) after the entry by the User of a conventional fixed PIN, is entered into a Terminal and sent to the Database where it may be matched by a similar Code generated by an identical process and algorithm. There is normally a time window for this system, but that does not necessarily prevent a real-time man-in-the-middle attack whereby the interceptor gains access to the Database in place of the User.

At present, there is no protection available against phishing attacks except to warn the User not to be so gullible and to protest that an actual Database would not ask such questions: and there is little protection against the man-in-the-middle attack since it is concerned with taking over the Database access (in a manner not readily ascertained by the user) rather than stealing data.

In fact, a man-in-the-middle attack is not especially common as yet, is certainly no simple matter to arrange and has been aimed to date only at "higher value" systems. Perhaps for these reasons, most systems entirely ignore the possibility and would be vulnerable to such an attack, but the incidence is slowly widening and increasing.

The present invention provides for a regime which is immune to both phishing and man-in-the-middle attacks since no Codes (other than userID codes or identification data and random codes) are sent to the Database at all. This is to be achieved by means of a variable Code to be produced by the Database and sent to the User at a remote Terminal, where it could be compared with Codes produced at the Terminal from a data carrying device or Card (hereafter called for the sake of brevity and clarity but not by way of limitation a "DataCard"), and it is a principal objective of the present invention to provide simultaneous mutual authentication by such means, which is not provided at present by UserID + PIN, a single use Code-generating device system or indeed any other presently available method.

### SUMMARY OF THE INVENTION

The invention is as defined in the Claims

### DETAILS OF THE INVENTION

### Configuration of Codes and means of authentication

The present invention therefore proposes a simple and integrated system whereby simultaneous mutual authentication may be achieved, by the sending of a variable Code from the Database to the Terminal where it may be compared on one of several alternative methods against Codes generated at the Terminal from the DataCard and from data input by the User.

Such a system may be used to enhance the simplest UserID and PIN system, to provide for a simple and inexpensive means of providing a variable access Code to be generated to replace a 6 digit variable Code produced by a device, and also at the other end of the scale to provide a means of enhanced security and protection for a biometric authentication system. Each of these alternative configurations may be achieved from the same DataCard and using the same system, the difference being merely in the Codes received from the Database. By this means both phishing and man-in-the-middle attacks are simply impossible since no data other than userID is sent over insecure networks at all.

The result of the comparison of the variable Codes - that generated at the Terminal from the DataCard and that received from the Database - will depend upon various factors, including required level of security, terminal facilities and Code length, but simultaneous mutual authentication would be achieved by any one of the following alternatives:-
[1] the Codes match without input from the User, providing verification of the DataCard (and of the Database) but not of the User - single factor authentication for very low security or to verify the DataCard itself
[2] the Codes match after the input of a Fixed PIN by the User, providing 2 factor userID/PIN authentication, but with very greatly increased security over a conventional system
[3] the differential between the Codes after a User PIN input generates onscreen a facial image representation of the User (which specifically is not recorded on the DataCard or Databse) for Terminal operator manual verification, providing 3 factor authentication
[4] as an alternative to [3] without using a PIN, the differential between the Codes generates the same facial image onscreen together with other data such as a representation of the User's signature (again, not otherwise recorded on the DataCard), the User's Postcode, date of birth or other data, which is then compared with data supplied by the User (specimen signature, Postcode etc) prior to the receipt of the Code from the Database, thereby providing 3 factor authentication without a PIN and enabling PIN reset after authentication without a Helpdesk intervention (since the Database does not know the Fixed PIN, with the avoidance of Helpdesk PIN re-set facilities representing a significant potential reduction in running costs)
[5] the differential between the Codes (optionally after the input of a Fixed PIN) generates the Template of a Biometric Verification system which may be compared with an actual Biometric image of the User captured at the Terminal, after such actual image has been subjected to the relevant algorithm to provide comparable data, thereby providing strong 3 factor Biometric authentication: as a variation,, the Biometric data capture may be a photograph of the User which is then subjected to the appropriate algorithm to provide automated comparison for Accept/Reject rather than by the Terminal operator comparison envisaged at [3] and [4].

### Variable Code system for authentication

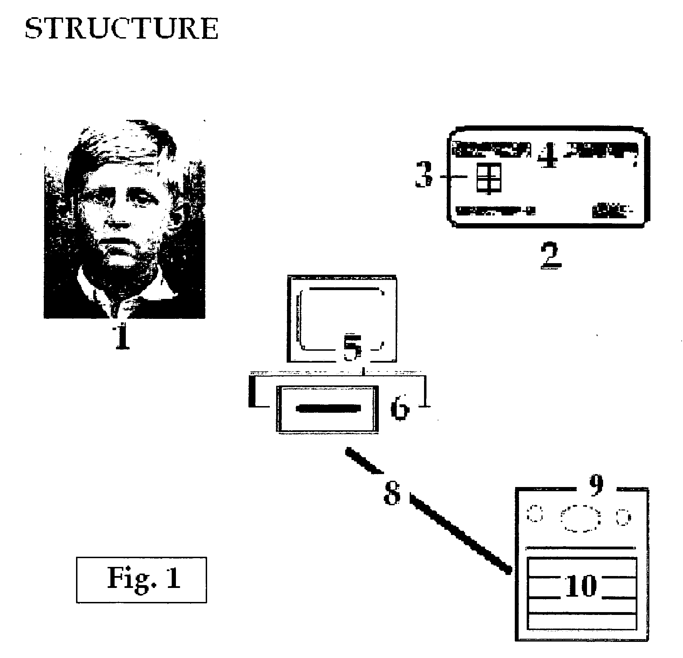

The main elements of the invention are all in common use (as explained in more detail at Fig. 1) and consist of a network of remote computer Terminals at which data is read from a User presented DataCard, and effectively compared (or in fact "amalgamated" as described below) with data held at the Database.

In the principal embodiment of the invention, the DataCard would record user identification codes and other authentication codes:
R (random), V (variable), C (access Code) and F (fixed), together with the algorithm required to compute the variable Codes.

### The Codes functions are as follows:-

R Random - this is a Code recorded on the DataCard and Database and either rotated on each occasion of use as shown below if not updated on any occasion: otherwise it is a new entirely random value generated at the Terminal, sent to the database (in clear) with userID and recorded on both the DataCard and Database by XOR logic gate against the previous R value. Code R is used on every occasion, either as XOR'd with the new R or rotated if none is generated.
V Variable - this Code is in fact fixed and recorded on the DataCard and Database, the variation being the time base rotation, and used on every occasion
C Code - this is recorded on one of the DataCard or Database and its rotational value after PIN application recorded on the other: Code C is used only when a PIN is required
F Fixed - this is again a Fixed Code, recorded on the DataCard and as a base for carrying the Biometric templates and facial image values, by XOR function at the Database: thus, the XOR of Code F on the DataCard and a Code FI derived from the Database will generate a value I which would be the representation of the facial image of the User. Code F is used when Image or Biometric authentication is required.

The Random Code R would be generated on each occasion of use given the ability at the Terminal to generate a sufficiently "random" random and to write the result to the DataCard (and of course to the Database although this capacity would be undoubted: if the randomness was in doubt, or a write facility to the DataCard not available, then the Code R would be rotated.

The User would at some stage and in secure circumstances record a Fixed PIN which would then be used to rotate the elements of the Code C making a recorded Code called Cp, and having the characteristic that when the correct PIN were applied to Cp, the value C (then equalling (again) the value at the Database) would result: thus, the Fixed PIN is solely a matter for the user, and is unknown by the Database.

The Codes would thus be at inception:-

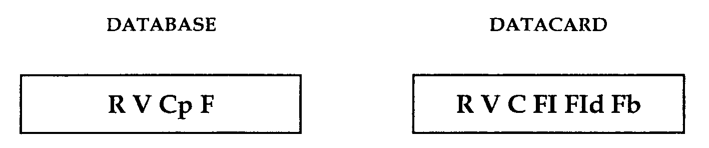

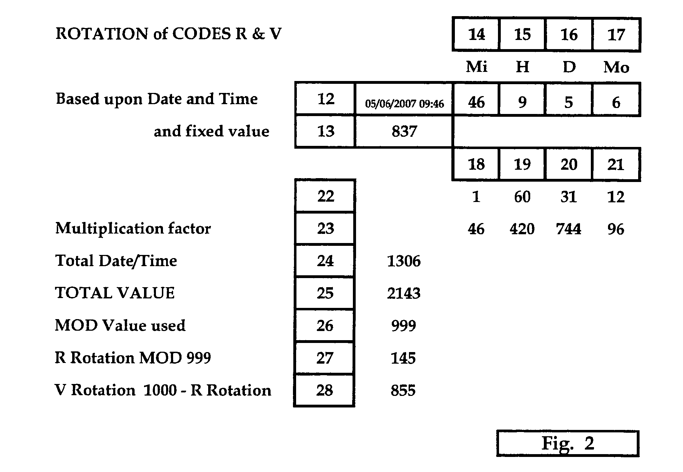

The term "rotating" and "rotation" mean the rearrangement of the elements of the Code to start at a point indicated by the adjusted time-based value: for example, in a Code with elements:
**1,2,3,4.....n,n+1,n+2,n+3.....z-3,z-2,z-1,z**
a rotation by "n" would give the new sequence of elements as:
**n,n+1,n+2,n+3.....z-3,z-2,z-1,z,1,2,3....n-2,n-1**
The term "amalgamation" means the application of the XOR logic gate to the individual binary bits of each element of the Code to provide a new binary value and therefore Code element, as under, whereby (with " ^ " meaning the application of the XOR logic gate):
**1 ^ 1 or 0 ^ 0 result in 0**
but **1 ^ 0 or 0 ^ 1 result in 1**
The rotations envisaged for the Codes would be:
Code R by a time-based factor (unless a new random were available)
Code V by a time based factor
Code C by the value of the Fixed PIN
   and a time based factor would be a value derived from the particular time of the authentication attempt as illustrated at Fig. 2.

Thus, the principal embodiment present invention is of a method and apparatus for the authentication of a system to the holder of a data carrying device recording identification data and other data related to a registered user of that system, wherein subsequent to the introduction of the data carrying device at a device reading apparatus connected to the system and the sending of said identification data to the system, the system sends, from recorded data related to the registered system user, a first code to the device reading apparatus which may be compared with a second code derived from the data carrying device, thereby providing for the authentication of the system by reference to a preset differential between the two codes.

### Alternative configurations

Alternative modes of operation provide for improvements to several distinct types of system:
[a] a conventional UserID + PIN system - by providing for random and rotated variable Codes to hide the underlying Fixed Codes in a simplified integrated form of encryption
[b] a variable Code system such as the token generated random number, by providing for a significantly longer variable Code and by making the expensive token or device redundant
[c] a Biometric system, by providing for the actual data reading at the Terminal (there subjected to the particular algorithm to produce a session Template) to be compared with the actual Template value revealed as the differential between the two Codes, without either the DataCard or the Database recording any identifiable Biometric data at all.

The particular algorithm would require to be stored on the DataCard or at the Terminal: and if this were not acceptable, the system could be reconfigured so that the actual Biometric capture data would be sent to the Database as raw data (implying longer Codes to carry the values) for conversion to a Session Template and comparison at the Database.

### Length of output Codes sent to the Database

The length of the Codes will determine the number of different combinations possible, which amounts to the square of the length: thus for example 10 element Codes would produce 100 combinations, 100 element Codes would produce 10,000 different combinations and Codes of say 50,000 elements could produce 2.5Bn combinations.

Since the DataCard could not be used without the PIN to authenticate the User, merely itself and the Database, and carries no meaningful data at all, the loss of the card would present no security risk at all whilst its replacement would be at less cost than most similar DataCards or Smartcards (not itself very dramatic) and at a very significantly reduced cost than existing code-generating tokens, and with none of the same administrative costs involved in its handling and distribution.

The Codes used in the present invention tends towards (in the mathematical sense) a Vernam Cipher or One Time Pad ("OTP"), becoming increasingly similar to a OTP the longer the Codes and eventually approaching (if not reaching) that state for which Claude Shannon in 1949 proved that because of the randomness involved, the value of any one element of a OTP gave no clue at all as to the value of any other element, and therefore a Code based upon a OTP used only once was absolutely secure against decryption. Although the OTP concerned the field of secure messages, the principles involved are the same.

### Biometric authentication

Authentication by Biometric verification of an actual reading reduced by the appropriate algorithm to a Session Template being compared against the revealed Template, would entail the following:
[a] the initial registration of Biometric data under controlled and secure circumstances
[b] the conversion of this data to a Template format by means of an (possibly proprietary or secret) algorithm (not of itself a part of the claimed invention)
[c] the XOR of the Template values with Code F
[d] the capture of an actual Biometric reading at a Terminal
[e] the application to it of the same algorithm as employed at [b] above to provide a Session Template
[f] the comparison of the Session Template with the actual Template (as revealed by the Code differential, but not otherwise stored anywhere) to provide the basis for an Accept/ Reject decision.

None of the steps listed immediately above involves an inventive step except perhaps [c], and is merely a restatement of conventional Biometric matching where a match-on-card is not allowed i.e. where actual data captured at a Terminal needs comparison with a Template value.

The particular and unique advantage of Biometric authentication is the ability to conduct, in respect of a proposed registrant or an actual user, a search against a database of persons already registered, and this would be available with the present invention just as in any other Biometric system. However the recorded Biometric data required for such a search would be kept separately and not be routinely accessed or available for authentication as such.

A proposed registrant would therefore be checked against a separate Database of users for duplication or for a match against wanted or indicated persons, and similarly the check could also be performed with an actual Biometric capture with the system in use, again precisely as with any other system but without the Biometric data being held on the DataCard or as above without it being routinely available.

Thus a further embodiment of the invention provides a method and apparatus for the simultaneous mutual biometric authentication of a system and a the registered user of that system by means of a data carrying device recording identification data and other data related to that system user comprising the following steps:
[a] the allocation of random codes to a data carrying device issued to the registered system user and to the system
[b] the capture of a biometric image of the system user
[c] the reduction of such image by means of an algorithm to a biometric template value in a format suited to comparison with other values in the same format
[d] the amalgamation of such biometric template value to a part of the code recorded on the system but not on the data carrying device
[e] the subsequent introduction of the data carrying device at a device reading apparatus connected to the system
[f] the sending of said identification data together with a new random code to the system
[g] the sending by the system of a first code derived from recorded data related to the system user to the device reading apparatus
[h] the generation of a second code derived from the data carrying device
   both such codes being determined by variations of elements of the recorded data by reference to an algorithm and determinant recorded on the data carrying device and on the system referenced in part to a specified time and date for the attempted authentication and both incorporating the new random code by exclusive/or logic gate and thereby resulting in first and second codes which vary on every occasion of use
[i] the comparison of first and second codes by exclusive/or logic gate and thereby deriving a differential between the two codes being the biometric template value
[j] the recording of a session biometric image capture
[k] the reduction of such image to a session template by application of the same algorithm as at [c]
[l] the comparison of the biometric template value with the session template value
[m] the evaluation of the difference between the two template values against preset criteria followed by acceptance as a biometric match or rejection as a non-match
   thereby providing for simultaneous mutual authentication by conventional biometric means at the device reading apparatus.
   As an alternative, the details of the Biometric algorithm are to be retained at the Database, the present invention provides for a method and apparatus for the biometric authentication of a system and a the registered user of that system by means of a data carrying device recording identification data and other data related to that system user comprising the following steps:

[a] the allocation of random codes to a data carrying device issued to the registered system user and to the system
[b] the capture of a biometric image of the system user
[c] the reduction of such image by means of an algorithm to a biometric template value in a format suited to comparison with other values in the same format
[d] the amalgamation of such biometric template value to a part of the code recorded on the system but not on the data carrying device
[e] the subsequent introduction of the data carrying device at a device reading apparatus connected to the system
[f] the sending of said identification data together with a new random code to the system
[g] the sending by the system of a first code derived from recorded data related to the system user to the device reading apparatus
[h] the verification of such first code at the device reading apparatus from data recorded on the data carrying card to provide the authentication of the system to the system user prior to any input by the system user
[h] the generation of a second code derived from the data carrying device to be sent to the system for comparison with the code on the system with the biometric template value
[i] the extraction of the differential between the second code and code on the system to reveal the biometric template value
[j] the recording of a session biometric image capture
[k] the reduction of such image to a session template value by application of the same algorithm as at [c]
[k] the amalgamation of such session template value to a part of the code recorded on the data carrying device to provide a third code
[l] the sending of the third code to the system
[m] the extraction at the system of the session template value
   all three such codes being determined as described and additionally by variations of elements of the recorded data by reference to an algorithm and determinant recorded on the data carrying device and on the system referenced in part to a specified time and date for the attempted authentication and both incorporating the new random code by exclusive/or logic gate and thereby resulting in first, second and third codes which vary on every occasion of use
[n] the comparison of the biometric template value with the session template value
[o] the evaluation of the difference between the two template values against preset criteria followed by acceptance as a biometric match or rejection as a non-match
   thereby providing for prior authentication of the system followed by conventional biometric authentication.

### Interoperability

One embodiment of the present invention therefore provides an integrated system in which different means of authentication may be used for different purposes or for different categories of security transaction or indeed value. Each method requires, after identification of the User, the sending of a Code from the Database to the remote Terminal which then results, after and required user input and depending upon the system selected, in:-
[a Code agreement with or without PIN
[b] facial image reproduction and comparison with PIN
[c] facial image and other data reproduction without PIN
[d] Biometric comparison and evaluation with PIN

The proposed invention may be used for very simple 1 factor authentication (mere presentation of the DataCard) to full 3 factor authentication (DataCard, PIN and Biometric reading). Each would involve prior authentication and there could be no match-on-card facility as the DataCard would not carry any meaningful personal data at all: but this would mean that the DataCard may be of the cheapest sort without a CPU, its loss would not be a security issue at all as none of the data for the PIN, Image and Biometric templates is recorded in any way on the DataCard, and provide different levels of security and interoperability to be uniquely available with the present invention.

Neither the DataCard nor the Database would retain any details of the fixed PIN, and accordingly the loss of a PIN could not be rectified by a Helpdesk, the abandonment of which in itself represents a significant cost reduction. Instead, the PIN could be self set again after authentication by Image recognition or Biometric authentication.

The present invention is therefore an integrated and interoperable method of authentication by different means for a wide variety of uses. Moreover, the use of a DataCard is not essential: in a static situation for remote authentication, a programme on a user's computer would suffice in producing the necessary Codes, for example in internet site access, although a DataCard (meaning as above any data carrying device including a UBS token) might be preferable anyway.

### DESCRIPTION OF THE DRAWINGS

**Fig. 1** Description of the structural elements involved in the present invention
**Fig. 2** DataCard Data and Rotation of Codes R and V
**Fig. 3** Codes used for alternative means of authentication
**Fig. 4** Flow chart for Prior Authentication system

**Fig. 1** is a diagram of the structural elements of the present invention, with a system User (1) having a DataCard (2) with an IC Chip (3) and Data (4).

The User (1) and DataCard (2) are associated with both a personal computer and a number of remote Terminals (5), all equipped with a Card reader (6), linked via a link (8) to a Database (9) which has details of all Users and relevant Codes, shown as Data (10). The Link (8) may be internal, a telephone or a wireless connection and is assumed to be insecure. The system is therefore suited to both personal use at home or workplace, as means or authentication to remote sites or databases, or may be used as a means of authentication at remote sites whilst on business or personal travel.

Fig.2 shows the concept of Code Rotation based upon the time/ date (12), recorded at the Terminal (5) and the Database (9) (and obviously to be synchronised at each authentication), here shown as 46 Minutes (14) past 7 o'clock (15) on 24^{th} (16) of August (17), and using a fixed value 837 (13) generated for each User (1) at registration, the Multipliers (22) shown as Minutes 1, Hours 60, Dats 31 and Months 12 (18,19,20,21), values for the actual date of 46, 420, 744 and 96 are generated (23) giving a total value of 1306 (24). When added to the Fixed value 837 (13), a final value of 2143 (25) for this authentication attempt is determined.

Depending upon the length of the Code, this value may be used as it is or may require to be reduced to fit the Code length: as illustrated, the Code length is 1,000 so the value (25) may be reduced by the application of a Modulus, here shown as 999 (26), giving final rotations for Code R of 145 (27) and the inverse for Code V of 855 (28). In fact the relationship between Codes R and V would not be fixed, and a rotation of 145 for Code R would not always result in a rotation of 855 for Code V.

Given very long Codes, the Multipliers (22) may be considerably larger, and the Modulus 999 (26) might instead be say 45,924 or some other indeterminate value, unknown other than to the Database and the DataCard.

The actual algorithm for the rotation is not fixed and is not a part of the invention claimed, which is for the principal of rotation in the context shown.

The Data (4) recorded on the DataCard (2) would consist of userID and system verification data, Codes R, V, C and F and details of the algorithm and Multipliers (22) Fixed value (13) MOD value (26) attributable to the time-date (12).

The name of the User (1) is not an essential, and the DataCard (2) could be entirely anonymous both externally and internally, so that confirmation of the User's name after receipt of a Code from the Database would be an optional means of authentication at the Terminal.

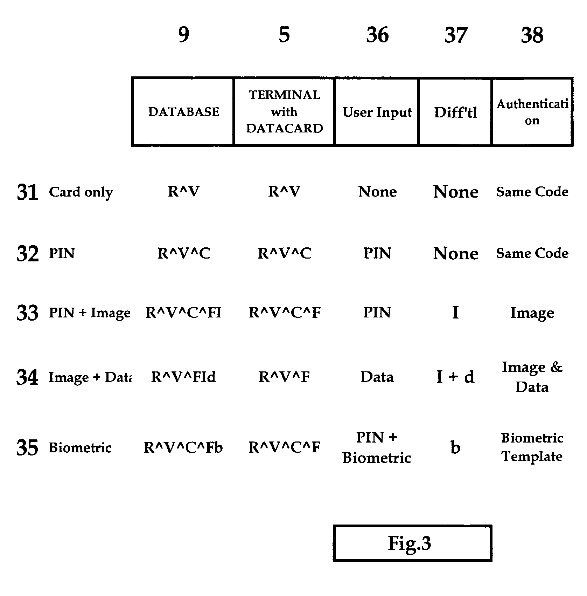

**Fig. 3** shows the different Codes required for the alternative means of authentication.

The Codes from the Database 9 are shown for Card only without input (31), with Fixed PIN input by the User (32), for PIN and the Image of the User reproduced onscreen at the Terminal 5 (33), the Image and other data to be verified by the User but without PIN input (34) and for Biometric authentication (35). Column (38) shows the differential between Column (9) Database and Column (5) Terminal (derived from the User (1) DataCard (2), and Column (39) Authentication.

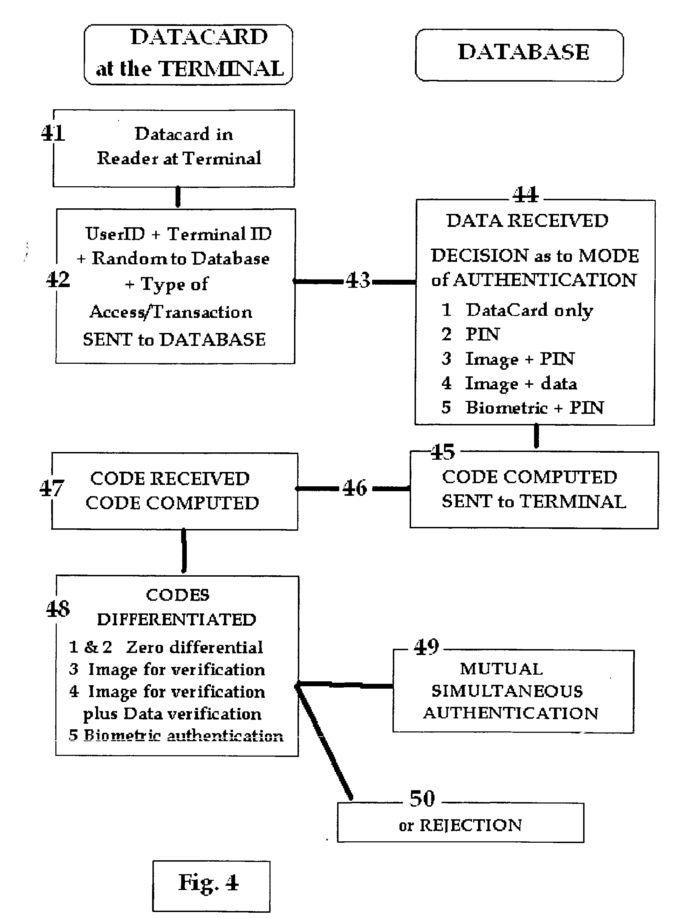

**Fig.4** shows a flowchart for the authentication process, commencing with the User (1) presenting (41) the DataCard (2) at the Terminal (5), from which the userID is read (42), Code V is rotated as shown in Fig 2 and either Code R is similarly rotated or a new random Code is generated, all being sent to the Database (43) including data identifying the Terminal (5) and the type of authentication required although this decision may be taken by the Database. Provided the Terminal knows which authentication is being used, it can produce the required matching Codes at the terminal to produce the authentication differential.

At the Database (5), the Codes is received (44) and the correct Code rotations for the Code V and the value of Code R (rotated or recovered from the Received Codes (44) so that the required Code (45) is then sent (46) to the Terminal (5), where it is received (47).

On differentiating the Codes (48) the appropriate differential then provides for Simultaneous Mutual Authentication (49) or not (50) as the case may be, as previously explained.

## Claims

1. A method and apparatus for the authentication of a system to the holder of a data carrying device recording identification data and other data related to a registered user of that system, wherein subsequent to the introduction of the data carrying device at a device reading apparatus connected to the system and the sending of said identification data to the system, the system sends, from recorded data related to the registered system user, a first code to the device reading apparatus which is compared with a second code derived from the data carrying device, thereby providing for the authentication of the system by reference to a preset differential between the two codes.

2. The method and apparatus of Claim 1 wherein the codes comprise predetermined variations of elements of the recorded data such that both the first code and the second code vary on each occasion of use without affecting the resultant differential.

3. The method and apparatus of Claim 2 wherein the variations of the elements of the recorded data are determined by reference to an algorithm and determinant recorded on the data carrying device and the system.

4. The method and apparatus of Claim 3 wherein the algorithm and determinant provide for variations related to a specified time and date for the attempted authentication.

5. A method and apparatus for the authentication of a system to the holder of a data carrying device recording identification data and other data related to a registered user of that system, wherein subsequent to the introduction of the data carrying device at a device reading apparatus connected to the system and the sending of said identification data to the system, the system sends, from recorded data related to the system user, a first code to the device reading apparatus which is compared with a second code derived from the data carrying device, both such codes being determined by variations of elements of the recorded data by reference to an algorithm and determinant recorded on the data carrying device and on the system referenced in part to a specified time and date for the attempted authentication, thereby resulting in first and second codes which vary on every occasion of use and providing for the authentication of the system by reference to a preset differential between the two codes.

6. The method and apparatus of Claim 5 wherein fixed personal identification data is entered by the system user at the device reading apparatus and applied by a predetermined algorithm to the second code derived from the data carrying device, thereby providing for simultaneous mutual authentication of system and system user by reference to a combination of the fixed personal identification data and to a preset differential between the first and second codes

7. The method and apparatus of Claim 5 wherein the differential comprises the binary value of a facial representation of the system user which is displayed at the device reading apparatus for comparison with the person presenting the data carrying device, thereby providing for simultaneous mutual authentication of system and system user.

8. The method and apparatus of Claim 5 wherein additionally the differential in addition comprises the binary value of a representation of the system user's signature, which is additionally displayed at the device reading apparatus for comparison with a specimen signature provided by that person.

9. The method and apparatus of Claim 5 wherein additionally the differential comprises the binary value of a representation of other personal data related to the system user, which is displayed at the device reading apparatus for verification of a part of that personal data by input or disclosure by that person.

10. The method and apparatus of Claim 5 wherein the differential comprises the binary value of biometric data of the system user, previously captured and reduced by an appropriate algorithm to form a template for subsequent biometric data capture matching and being amalgamated by exclusive/ or logic gate onto a part of the first code, such template being recovered as the differential being compared with a temporary template derived from an actual biometric image reduced by the same algorithm after capture at the time of the attempted authentication by a biometric capture device linked to the device reading apparatus, thereby providing for simultaneous mutual authentication of system and system user by conventional biometric verification.

11. The method and apparatus of Claim 1 wherein a new random code is sent from the device reading apparatus with the identification data to the system and amalgamated using an exclusive/or logic gate into both the first code and the second code without affecting the resultant differential.

12. The method and apparatus of Claims 11 wherein a predetermined fixed personal identification data is entered by the system user at the device reading apparatus and applied by a predetermined algorithm to the second code derived from the data carrying device, thereby providing for simultaneous mutual authentication of system and system user by fixed personal identification data and the resultant differential between the two codes.

13. The method and apparatus of Claim 11 wherein the differential comprises the binary value of a facial representation of the system user which is displayed at the device reading apparatus for comparison with the person presenting the data carrying device, thereby providing for simultaneous mutual authentication of system and system user.

14. The method and apparatus of Claim 11 wherein additionally the differential in addition comprises the binary value of a representation of the system user's signature, which is additionally displayed at the device reading apparatus for comparison with a specimen signature provided by that person.

15. The method and apparatus of Claim 11 wherein additionally the differential comprises the binary value of a representation of other personal data related to the system user, which is displayed at the device reading apparatus for verification of a part of that personal data by input or disclosure by that person.

16. The method and apparatus of Claim 11 wherein the differential comprises the binary value of biometric data of the system user, previously captured and reduced by an appropriate algorithm to form a template for subsequent biometric data capture matching and being amalgamated by exclusive/or logic gate onto a part of the first code, such template being recovered as the differential being compared with a temporary template derived from an actual biometric image reduced by the same algorithm after capture at the time of the attempted authentication by a biometric capture device linked to the device reading apparatus, thereby providing for simultaneous mutual authentication of system and system user by conventional biometric verification.

17. A method and apparatus for the simultaneous mutual biometric authentication of a system and a the registered user of that system by means of a data carrying device recording identification data and other data related to that system user comprising the following steps:
[a] the allocation of random codes to a data carrying device issued to the registered system user and to the system
[b] the capture of a biometric image of the system user
[c] the reduction of such image by means of an algorithm to a biometric template value in a format suited to comparison with other values in the same format
[d] the amalgamation of such biometric template value to a part of a code recorded on the system but not on the data carrying device
[e] the subsequent introduction of the data carrying device at a device reading apparatus connected to the system
[f] the sending of said identification data together with a new random code to the system
[g] the sending by the system of a first code derived from recorded data related to the system user to the device reading apparatus
[h] the generation of a second code derived from the data carrying device
both such codes being determined by variations of elements of the recorded data by reference to an algorithm and determinant recorded on the data carrying device and on the system referenced in part to a specified time and date for the attempted authentication and both incorporating the new random code by exclusive/or logic gate and thereby resulting in first and second codes which vary on every occasion of use
[i] the comparison of first and second codes by exclusive/or logic gate and thereby deriving a differential between the two codes being the biometric template value
[j] the recording of a session biometric image capture
[k] the reduction of such image to a session template by application of the same algorithm as at [c]
[l] the comparison of the biometric template value with the session template value
[m] the evaluation of the difference between the two template values against preset criteria followed by acceptance as a biometric match or rejection as a non-match
thereby providing for simultaneous mutual authentication by conventional biometric means at the device reading apparatus

18. The method and apparatus of Claim 1 wherein the differential relates to the binary value of data residing on the system database and specified by the system user together with the user's identification code, such binary value being amalgamated by the system with the first code by exclusive/ or logic gate and thereafter being retrieved by the system user by exclusive/or logic gate amalgamation between the first and second codes.

19. The method and apparatus of Claim 5 wherein the differential relates to the binary value of data residing on the system database and specified by the system user together with the user's identification code, such binary value being amalgamated by the system with the first code by exclusive/or logic gate and thereafter being retrieved by the system user by exclusive/or logic gate amalgamation between the first and second codes.

20. The method and apparatus of Claim 12 wherein the differential relates to the binary value of data residing on the system database and specified by the system user together with the user's identification code, such binary value being amalgamated by the system with the first code by exclusive/ or logic gate and thereafter being retrieved by the system user by exclusive/or logic gate amalgamation between the first and second codes.
